# EUROPEAN PATENT APPLICATION

(11) **EP 2 922 010 A2**
(43) Date of publication of application: **23.09.2015**
(21) Application number: 14193228.5
(22) Date of filing: 14.11.2014
(51) Int. Cl.: G06Q 30/02

(54) **Digital voucher authentication**

(30) Priority: 15.11.2013 GB 201320210
(71) Applicant: Culyer, Robert, Fleet, Hampshire GU51 1BW (GB)
(72) Inventor: Culyer, Robert, Fleet, Hampshire GU51 1BW (GB)
(74) Representative: Wilson, Alan Stuart

(57) **Abstract**

A device for presenting a digital voucher comprises: voucher presenting means for presenting a digital voucher and a microphone. The device is arranged to: present the voucher using the voucher presenting means; receive a sound challenge signal via the microphone; and present a challenge response using the voucher presenting means.

## Description

### Field of the Invention

The present invention relates to authentication of digital vouchers, and has particular application in the authentication of digital barcodes or other coding patterns as displayed, for example, on mobile devices.

### Background of the Invention

Digital barcodes are well known, and can be made up of bars or lines, or indeed other patterns such as squares. There are many known methods to securely encode data in a barcode. Known methods include using a symmetric (secret) key to encrypt data and then encode the encrypted data into the barcode, and using asymmetric encryption to generate a digital signature using a private key that is appended to the plain text barcode data which can be verified using the corresponding public key. Both these methods go a long way to ensuring that the data in the barcode is correct but does not address whether the barcode is a copy.

Barcodes are increasingly being used by mobile devices as identifiers for airline flights, train and bus tickets, tickets for night clubs and concerts, vouchers and other identifiers. Unless the data in the barcode is 100% unique, and the barcode reading device has access to a database holding every unique barcode and can check whether it has been used before, it is impossible to determine if the barcode is a copy.

An example of this may be a digital bus ticket. If Passenger A has bought a ticket that allows travel for that week, Passenger A takes a screen copy of their phone displaying the barcode and sends it to Passenger B, then the bus scanner, operating in a offline capacity due to limited network connectivity to the issuing database, would accept both digital tickets as valid.

### Summary of the Invention

According to a first aspect of the invention there is provided a device for presenting a digital voucher, the device comprising: presenting means, for presenting a digital voucher, and a microphone; wherein the device is arranged to: present the voucher using the voucher presenting means; receive a sound challenge signal via the microphone. The device may be arranged to present a challenge response, for example using the voucher presenting means.

The device may comprise processing means.

The device, for example the processing means, may be arranged to generate the challenge response using data encoded within the sound challenge signal.

The device may be arranged to present identity data with the voucher, for example in the form of a token, and the challenge response may be arranged to encode corresponding identity data.

The device, for example the processing means, may be arranged to decode the challenge signal by analysing the frequency content of the challenge signal.

The device may further comprise a display. The device may be arranged to present the voucher, or the challenge response, or both as an encoding pattern on the display. The encoding pattern may be a barcode.

Alternatively, or in addition, the device may further comprise data storage means, and the device may be arranged to present the voucher, or the challenge response, or both by allowing access to, or transmitting, data stored in the data storage means. For example the device may comprise a transmitter, and the device may be arranged to present the voucher by transmitting a signal encoding the voucher.

The present invention further provides a voucher verification device comprising input means via which a digital voucher can be presented to the device, processing means, and a speaker, wherein the processing means is arranged to read, or decode, a digital voucher presented to the device, generate an audio challenge signal for transmission, as a sound signal, via the speaker. The device may be arranged to decode a challenge response presented to the device. The device may be arranged, if the challenge response meets a least one check criterion, to validate the voucher.

The processing means may be arranged to check the challenge response against data encoded within the sound challenge signal.

The processing means may be arranged to compare identity data presented with the voucher, with identity data presented in the challenge response.

The device may be arranged to encode challenge data in the frequency content of the challenge signal.

The input means may comprise a reader arranged to read an encoding pattern in which the voucher can be presented to the device. Alternatively the input means may comprise a receiver arranged to receive a signal, which may be any form of wireless signal, typically an RF signal, encoding the voucher.

The present invention further provides a system for verification of a voucher, the system comprising a device for presenting the digital voucher according to the invention and a device for verifying the voucher according to the invention.

When a barcode is presented to a barcode scanner the system may utilise a challenge protocol to validate the authenticity of the barcode, which can be used to ensure that it is not a forgery or a copy.

The voucher may be issued in a digital format. For example it may be encoded in data defining a barcode and transmitted to a device (e.g. a mobile phone) capable of displaying the barcode. The voucher barcode may be encrypted by a key or digitally signed. An element of the barcode may include a token that identifies the user, device or application or any combination of the three.

When the user wishes to use the voucher it may be presented to the barcode reader. The barcode reader may be arranged to accept the barcode and if necessary perform any decryption of the encrypted contents or validation of the digital signature.

The barcode reader may then be arranged to issue a challenge to the device displaying the presented barcode to validate it is being used by the authorised user.

This challenge may be a sound data stream that can be listened to or detected by the barcode device. The sound stream may encodes a small amount of data indicating a challenge mechanic that has been chosen to authenticate the transaction.

This challenge mechanic could be as simple as asking the barcode device to add the received data (e.g. a 4 digit number) to a challenge response barcode, or it could be selecting an encryption key.

The challenge data may be encoded in any appropriate format (including but not limited to FSK, MDMF, SDMF, DTMF, TTY, Baudot, Barker etc.) that the device displaying the barcode is programmed to receive and decode.

Once the device displaying the barcode receives the challenge it may be arranged to display a challenge response barcode. This barcode may include the barcode device's generation of the token described above and the answer to the challenge data (such as responding with the same 4 digit number) or selecting the appropriate encryption key etc.

Once the barcode reader has accepted the challenge barcode it may issue a further sound command to instruct the barcode device to delete the voucher or mark it as used.

Once the barcode reader has completed the authentication process it may print tickets, display validation, open a turnstile etc.

Some embodiments of the invention can:
- Remove the security issue around users copying barcodes;
- Make it extremely difficult for hackers to produce forgeries;
- Remove the security issue around users being able to use barcodes multiple times if not permitted to do so;
- Remove the need for a barcode reader to be connected to a validation server.

Some embodiments of the invention include a challenge protocol using an additional channel to force the mobile device to re-authenticate the voucher before it can be used. The challenge protocol preferably does not require any connectivity to the issuing database, and can preferably work 100% offline.

The invention further provides a method to authenticate a barcode digitally displayed comprising: providing a barcode display device with microphone; providing a barcode reading device with speaker; generating a challenge audio command; and generating a challenge response barcode.

The barcode displaying device may display a barcode on a display which is read by barcode reading module and processed by barcode reading device.

The barcode may include a token, which may include identity or other data.

The voucher and/or the token may be encrypted and/or digitally signed in the barcode.

The barcode reading device may issue a challenge audio command via a speaker.

The barcode displaying device may decode the challenge audio command captured via microphone.

The barcode displaying device may respond to challenge audio command by displaying a challenge response barcode, which may be read by the barcode reading device and processing by a barcode reading module.

The barcode displaying device may create a token from known device and/or application and/or user information and include it in the challenge barcode.

The challenge barcode may be encrypted or digitally signed.

The barcode reading device may compare the tokens to determine authenticity.

The device, or the system, may include any one or more features, in any combination, of the embodiments of the invention which will now be described by way of example only with reference to the accompanying drawings.

### Brief Description of the Drawings

**Figure 1** is a schematic diagram of a system according to an embodiment of the invention;
**Figure 2** is a diagram showing operation of the system of Figure 1;
**Figure 3** is a plot of an audio challenge signal used in the system of Figure 1; and
**Figure 4** is frequency plot of the signal of Figure 3.

### Detailed description of the preferred embodiments

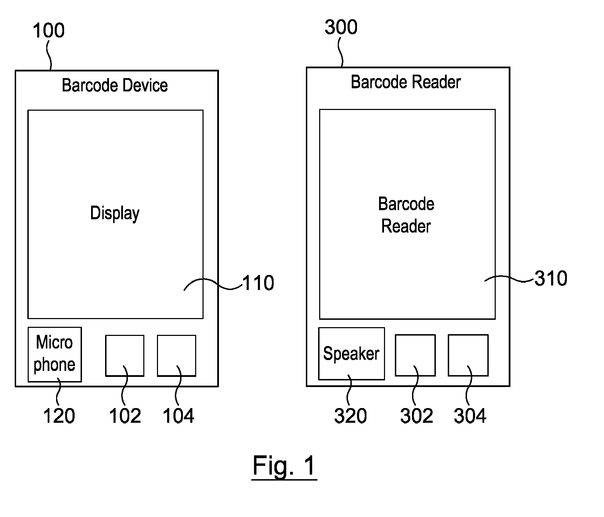

Referring to Figure 1, a barcode display and authentication system comprises a barcode display device 100 and a barcode reader device 300. The barcode display device 100 comprises a processor 102, a memory 104, a display 110 and a microphone 120. The barcode reader 300 comprises a processor 302, a memory 304, a barcode reader 310 arranged to image or scan a barcode that is presented to it, and a speaker 320. The barcode display device may be, for example, a mobile phone or a tablet.

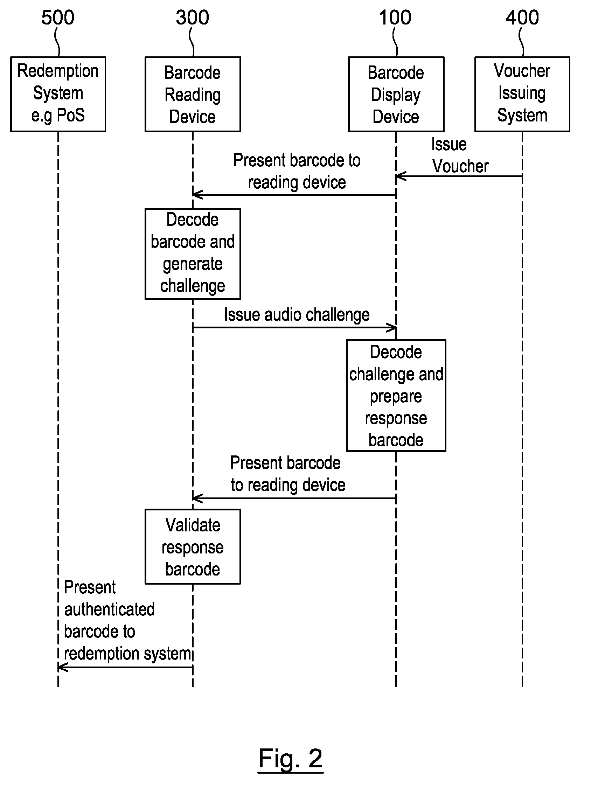

Referring to Figure 2, the barcode display device 100 is arranged to receive a digital voucher from a voucher issuing system 400. The voucher might be, for example, an airline ticket, and the voucher encodes data identifying, for example, details of the flight for which the ticket is valid and the passenger who has booked the flight. The barcode display device is arranged to store the voucher data in its memory 104.

When a user wants to redeem the voucher, for example to check in for a flight, the display device 100 is arranged to display a voucher (data) barcode on its display 110, and to monitor signals received by the microphone 120 in response. The voucher barcode is arranged to encode the voucher data and also to encode identity data in the form of a token. The identity data my may include, for example, personal identity data associated with the user, such as their name, email address, phone number or customer ID, device identity data associated with the barcode display device, such as device serial number but which could also be a phone number, or application data associated with an application being run on the device, such as an application ID or package name, or a combination of any two or more of these. The barcode display device 100 is then arranged to monitor sound inputs to the microphone 120 to detect receipt of a sound challenge signal. This can be done in any known manner, for example by sampling the audio signal, which is typically an electric signal, output by the microphone 120 which varies with sound pressure, at an appropriate sample rate, 44.1kHz in this embodiment, and then constructing a spectrum of the audio signal sample, which indicates the frequency components of the sound signal being received. These frequency components can be used to encode data.

Meanwhile the barcode reader 300 is arranged to read the voucher barcode and extract the voucher data from it. It is then arranged to analyse the voucher data to determine whether the voucher data is valid for the reader. If the voucher data is valid, the barcode reader is arranged to generate a sound challenge signal which encodes challenge data. The data can be encoded in the sound signal in many ways, but in this embodiment it is encoded in the frequency content of the challenge signal as will be described in more detail below.

The data content of the sound challenge code can be anything sufficient to allow the barcode display device 100 to identify it as a challenge code. For example it can be a simple four digit code, or it can take other forms as described in more detail below.

When the barcode display device 100 detects that it has received a valid challenge signal via the microphone 120, it is arranged to respond by displaying a challenge response barcode. The barcode will again encode data, which includes identity data, which in this case is the same as that encoded in the original barcode, and response data that is related to the challenge code in a predetermined way. For example, it may just repeat the four digit challenge code in the challenge signal, or it might include a modified version of that data that has been modified using an algorithm so that the algorithm can also be used by the barcode reader 300 to check the response.

The barcode reader 300 is then arranged to decode the challenge response barcode and to use the data contained in it to authenticate the original barcode. In this case it is arranged to compare the identity data in the two barcodes to determine that they are the same, and to check the response data to check that it is in the expected form. If these checks are positive, the barcode is deemed to be valid and the voucher can then be redeemed by the user.

Further details of each of the steps described above will now be provided for various embodiments of the invention. The challenge signal in this embodiment is a sound signal that comprises multiple frequencies encoded into a short sound file. The encoding algorithm defines a set of sound frequencies which are used to encode data. The presence or absence of sound signal content at each of the coding frequencies is used to code the data. In this embodiment, the first coding frequency is 10 kHz and the coding frequencies are spaced apart by equal frequency steps. In much the same way as a linear barcode is made up of a series of lines which are black or white to represent binary 1's and 0's, so too is the sound challenge signal codes data with the coding frequencies that are present representing the 1's and the gaps in the frequency spectrum between the coding frequencies representing the 0's. It will be appreciated that, while simple regular spacing of the coding frequencies is simple, the coding frequencies can be assigned in a variety of different ways.

The challenge value chosen in this embodiment comprises 3 numeric digits and a single numeric check digit. A total of 4 digits have been selected as the frequencies that make up the 1's can be encoded quickly into a standard mono WAV file using frequency/amplitude addition. This approach has been taken as it is not CPU intensive and could be implemented in low power embedded hardware.

The binary representation of the numeric digits is:

| | | | | |
|---|---|---|---|---|
| 0 | 0001101 | | 5 | 0110001 |
| 1 | 0011001 | | 6 | 0101111 |
| 2 | 0010011 | | 7 | 0111011 |
| 3 | 0111101 | | 8 | 0110111 |
| 4 | 0100011 | | 9 | 0001011 |

Once a 3 digit challenge is selected (e.g. 123) a check digital is calculated. This check digit is calculated using the following algorithm:
var sum = 0;
var alt = true;
var digits = number.ToCharArray();
for (int i = digits.Length - 1; i >= 0; i--)
   {
   var curDigit = (digits[i] - 48);
   if (alt)
   {
   curDigit *= 2;
   if (curDigit > 9)
   curDigit -= 9;
   }
   sum += curDigit;
   alt = !alt;
   }
   if ((sum % 10) == 0)
   {
   return "0";
   }
   return (10 - (sum % 10)).ToString();

In the case of the example "123" value this would return a check digit of "0". The encoding algorithm then builds a string based on the binary representation of the numeric digits; in this example case producing "0011001001001101111010001101".

Using a sample rate of 44.1kHz and a duration of 1000ms the sound signal is then encoded starting at a frequency of 10000Hz. The following algorithm demonstrates how the encoding works.
int BIN_RANGE = SAMPLE_RATE / 1024;
int duration = 1000; // ms
int amplitude = Int16.MaxValue;
int numSamples = (int)(duration * SAMPLE_RATE) / 1000;
List<byte> audio = new List<byte>();
for(int i=0; i<numSamples; i++)
{
   int d = 0;
   int count = 0;
   int frequency = 10000;
   for (int j = 0; j < binary.Length; j++)
   {
   if (binary[j] == '1') // mark
   {
   double angle = (Math.PI * 2 * frequency) /
   (SAMPLE_RATE *CHANNELS);
   d += Convert.ToInt16(amplitude * Math.Sin(angle * i));
   count++;
   }
   frequency += BIN_RANGE*2;
   }
   d /= count;
   audio.Add((byte)(d & 0xff));
   audio.Add((byte)((d » 8) & 0xff));
   }

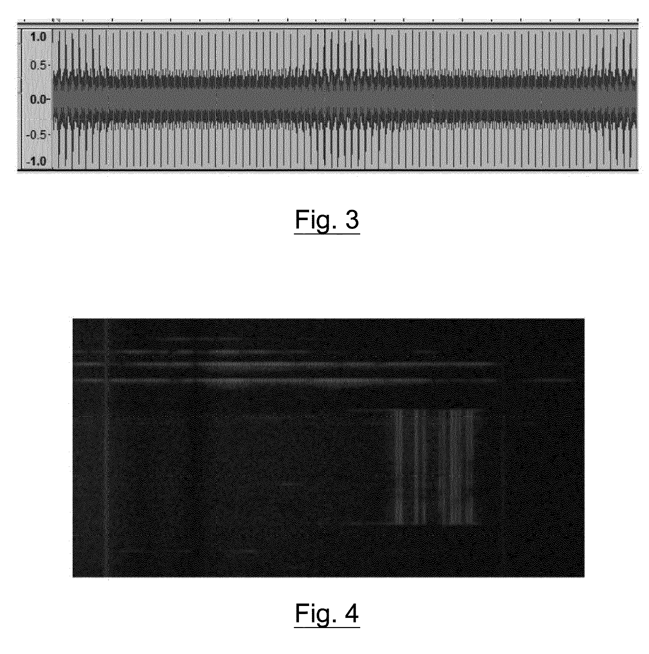

The resulting bytes are encoded to a WAV file. An example of the wave form of the WAV file is shown in Figure 3. This waveform, when played to a speaker and captured in a spectrum analyser, results in a visualisation of the original sonic barcode as shown in Figure 4.

### Decoding the audio signal

While the barcode display device 100 is displaying the barcode is it also arranged to sample the audio signal from its microphone. Using the same sampling rate as the audio file each sample is pushed through a fast fourier transform (FFT). Between each sample a window algorithm such as a Hanning can be used.

The audio signal is decoded back into binary based on its frequency content. The content, i.e. the amplitude, of the audio signal at each of the coding frequencies is measured. For each of the coding frequencies the presence of a signal above a threshold amplitude is taken to represent a 1, and an amplitude below the threshold is taken to represent a 0. This can be done using the following algorithm:

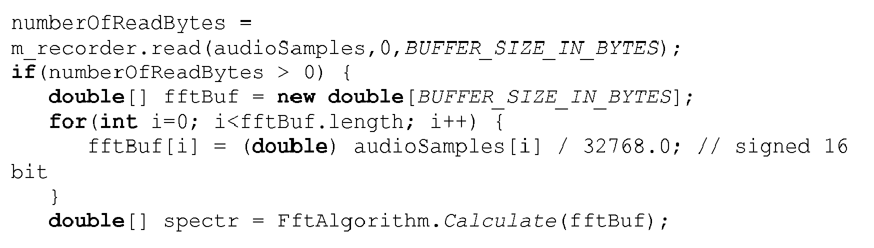

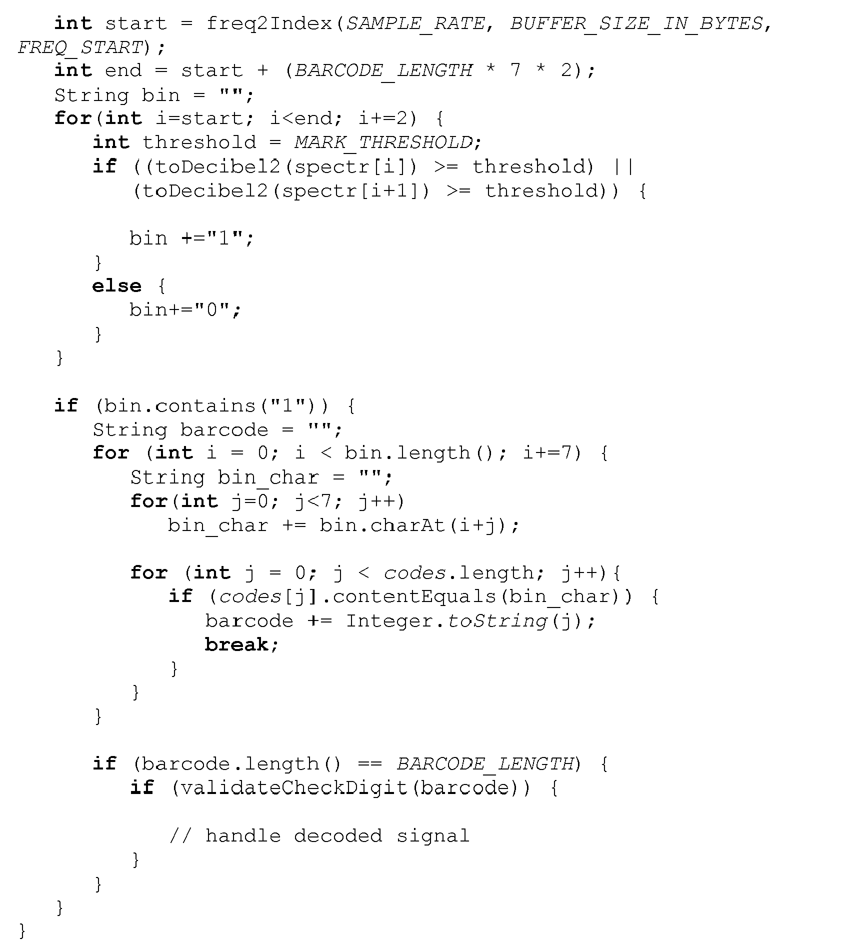

Once the resulting four digits are decoded the check digit is validated by calculating an expected value for it from the four digits using the following algorithm:
var total = 0;
var alt = false;
var digits = Number.ToCharArray();
for (int i = digits.Length - 1; i >= 0; i--)
   {
   var curDigit = (int)char.GetNumericValue(digits[i]);
   if (alt)
   {
   curDigit *= 2;
   if (curDigit > 9)
   curDigit -= 9;
   }
   total += curDigit;
   alt = !alt;
   }
   return total % 10 == 0;

If the check digit matches the last digit decoded from the audio then the challenge signal has been decoded correctly and the challenge value is passed to the module that will issue the challenge barcode.

The selection of the frequencies, the multiple samples that can be captured per sound signal and the addition of a check digit makes the signal highly immune to environmental noise.

### Constructing the challenge response barcode

The challenge response barcode data is constructed from the decoded audio challenge data and one or more sets of data from the original barcode, for example one or more sets of identity data. These elements are combined and the resulting data encoded using an algorithm. In this embodiment the algorithm is arranged to encode the data in such a way as to be able to be confirmed by the barcode reading device 300 but not able to be generated by any application other than the one authorised to display the original voucher (data) barcode. This encoding algorithm can take many forms, but in one embodiment a simple example is used that obfuscates or encodes the data by taking character position 1, 4, 6, 8 and 10 of the data barcode, combining that data with the challenge data and encoding the hash. Therefore, if the barcode data was "BARCODE TEST" - this obfuscated example would encode the hash of "BCD E1230" which, depending on the hashing algorithm, could result in "18 A4 2D 76 02 E0 75 F2 0F D8 2C BA F3 1F 5C D5 8A 64 68 10". This value would then be encoded into the response barcode and presented to the barcode reading device.

### Validating the challenge response barcode

The barcode reading device has the challenge response algorithm stored in its memory, and can therefore authenticate that the response is constructed properly using the same parts of the voucher (data) barcode and the value of the challenge it issued, modified by the encoding algorithm.

Once the response barcode is authenticated the barcode reading device is arranged to pass the voucher (data) barcode to the redemption system 500 for processing.

In a further embodiment, the device for presenting the voucher includes a contactless radio chip or tag (e.g. a near field communication (NFC) tag) and the device reading the voucher includes the capability to read data stored in memory on the radio chip or tag. Instead of reading the presented barcode, the reading device would read the presented data using radio frequency (such as 13.56MHz for NFC) and the appropriate protocol. NFC for example supports multiple ways to exchange data (peer-to-peer, NFC Data Exchange Format (NDEF), client/server etc.) and, in much the same way as with displaying a barcode on a device LCD, there are few restrictions to prevent applications or users generating fraudulent transmissions. Taking NDEF as an example, in much the same way as with the barcode embodiment above, the reading device would authenticate the NDEF data with a challenge which would require the presenting device to generate a second NDEF record to authenticate the first.

## Claims

1. A device for presenting a digital voucher, the device comprising:
voucher presenting means for presenting a digital voucher, and a microphone;
wherein the device is arranged to:
present the voucher using the voucher presenting means;
receive a sound challenge signal via the microphone; and
present a challenge response using the voucher presenting means.

2. A device according to claim 1 wherein the device is arranged to generate the challenge response using data encoded within the sound challenge signal.

3. A device according to claim 1 or claim 2 which is arranged to present identity data with the voucher, and the challenge response is arranged to encode corresponding identity data.

4. A device according to any preceding claim which is arranged to decode the challenge signal by analysing the frequency content of the challenge signal.

5. A device according to any preceding claim further comprising a display, wherein the device is arranged to present the voucher as an encoding pattern on the display.

6. A device according to any one of claims 1 to 4 further comprising data storage means, wherein the device is arranged to present the voucher by allowing access to, or transmitting, data stored in the data storage means.

7. A voucher verification device comprising voucher input means via which a digital voucher can be presented to the device, processing means, and a speaker, wherein the processing means is arranged to decode a digital voucher presented to the device, generate at audio challenge signal for transmission via the speaker, decode a challenge response presented to the device, and if the challenge response meets a least one check criterion, validate the voucher.

8. A device according to claim 7 wherein the processing means is arranged to check the challenge response against data encoded within the audio challenge signal.

9. A device according to claim 7 or claim 8 wherein the processing means is arranged to compare identity data presented with the voucher, with identity data presented in the challenge response.

10. A device according to any one of claims 7 to 9 which is arranged to encode challenge data in the frequency content of the challenge signal.

11. A device according to any one of claims 7 to 10 wherein the input means comprises a reader arranged to read an encoding pattern in which the voucher can be presented to the device.

12. A device according to any one of claims 7 to 10 wherein the input means is arranged to receive the voucher from data storage means.

13. A system for verification of a voucher, the system comprising a device for presenting the digital voucher according to any one of claims 1 to 6, and a device for verifying the voucher according to any one of claims 7 to 12.

14. A device for presenting a digital voucher substantially as described herein with reference to the accompanying drawings.

15. A voucher verification device substantially as described herein with reference to the accompanying drawings.

16. A voucher verification system substantially as described herein with reference to the accompanying drawings.
